(19) Europäisches Patentamt
European Patent Office
Office européen des brevets

(11) Publication number: **0 063 405**
**B1**

(12) **EUROPEAN PATENT SPECIFICATION**

(45) Date of publication of patent specification: **26.08.87**

(51) Int. Cl.$^4$: **G 01 F 1/24**

(21) Application number: **82300565.7**

(22) Date of filing: **04.02.82**

(54) **Fluid flow rate measuring apparatus.**

(30) Priority: **05.02.81 JP 16536/81**
**09.11.81 JP 178458/81**
**18.11.81 JP 183663/81**

(43) Date of publication of application:
**27.10.82 Bulletin 82/43**

(45) Publication of the grant of the patent:
**26.08.87 Bulletin 87/35**

(84) Designated Contracting States:
**DE FR GB IT**

(56) References cited:
**CH-A- 492 202**
**DE-A-1 648 098**
**FR-A- 865 705**
**FR-A-2 441 832**
**GB-A-1 135 394**
**US-A-3 522 731**

(73) Proprietor: **INOUE-JAPAX RESEARCH INCORPORATED**
**5289 Aza Michimasa Nagatsudamachi Midoriku**
**Yokohamashi Kanagawaken (JP)**

(72) Inventor: **Inoue, Kiyoshi**
**3-16-8 Kamiyoga**
**Setagayaku Tokyo (JP)**

(74) Representative: **Saunders, Harry et al**
**SAUNDERS & DOLLEYMORE European Patent Attorneys 2 Norfolk Road**
**Rickmansworth Hertfordshire WD3 1JH (GB)**

**EP 0 063 405 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a fluid flow meter, that is to say, a device for measuring the mass flow rate of a fluid.

Fluid flow meters utilizing a float member have been known. In these known devices, a glass tubular casing constituting a fluid conduit is disposed vertically, and a fluid to be measured is introduced through an inlet pipe provided at its lower end and is discharged through an outlet pipe provided at its upper end. A float is disposed in the casing and is displaceable therein by an amount determined by the mass rate of flow of the fluid passing through the conduit. In these devices, suitable flow rate indicia are provided to enable the flow rate to be visually read or, alternatively or in addition, an optical sensor is provided to optically measure the index or the position of the float in the flow meter casing whereby to indicate the fluid flow rate. Inconveniently, these devices are subject to measurement errors obviously when dusts are existent in the optical path, and further they require bothersome maintenance to quite a degree to ensure that the glass flow meter casing is at all times kept clean; hence they are difficult to maintain in environments subject to contamination or pollution. Furthermore, devices of the indicia type tend to suffer visual reading errors, and cannot by themselves be used for the purposes of controlling the fluid flow itself or associated equipments. Devices with an optical sensor require relatively complex structures, and hence are expensive to manufacture, and their cost is further augmented where the aforesaid maintenance problems are taken into account.

Accordingly, the present invention seeks to provide a flow meter which (a) is relatively simple in structure, inexpensive and easy to maintain, (b) is practically immune to environmental pollution or contamination, (c) is free from measurement errors, (d) affords due measurement precision, and (e) is capable of providing a measurement signal that can be used for a control purpose.

The prior art cited against this application includes the following relevant patent specifications, namely (a) CH—A—492 202, (b) GB—A—1 135 394, (c) DE—A—1 648 098, (d) FR—A—865 705, (e) FR—A1—2 441 832, and (f) US—A—3 522 731.

Each such specification relates to a fluid flow meter in which an elongate fluid flow chamber, through which fluid may flow, encloses a float member, which float member is free to be displaced along that chamber against its own weight or another biasing force by the fluid flowing through the chamber. The float member is arranged to vary, as its position in the fluid flow chamber varies, the magnetic flux linking an electrical winding arrangement carried externally of the fluid flow chamber, so that an electrical signal dependent upon the position of the float member, and hence on the rate of fluid flow through the chamber, is produced by that winding arrangement.

The manifold arrangements disclosed in those specifications show a great variety of technical approaches to the design of such fluid flow measuring devices, all of which approaches are substantially different to that of the devices of the present invention.

In the specification CH—A—492 202, the fluid flow chamber is frusto-conical in shape, being defined by a tapering glass tube of uniform wall thickness. The electrical winding arrangement is wound directly on to the tapered external surface of that glass tube, and comprises two separate, superposed, multi-layer, distributed windings. One such winding, a primary winding, is uniformly wound and is energised from an alternating current supply source. The other winding, a secondary winding, is non-uniformly wound, having a number of turns per unit length which decreases in the direction of fluid flow. That secondary winding delivers to a voltmeter an output voltage signal which is dependent upon the magnetic coupling of the primary and secondary windings produced by the float member according to its position in the flow chamber. The float member comprises a bundle of soft iron wires bonded together in the form of a bullet.

In the specification GB—A—1 135 394, the fluid flow chamber is frusto-conical in shape, and is formed within a heavily tapered glass tube. A single electrical winding is wound around the heavily-tapered external surface of the glass tube, and has an inter-turn pitch which is uniform, or otherwise decreases continuously from one end of the coil to the other. The float member is of aluminium, and is frusto-conical in shape to match the shape of the fluid flow chamber.

In the specification DE—A—1 648 098 the fluid flow chamber is in the form of an elongate cylinder defined by an elongate, parallel-sided tube. That tube carries externally at least two separate, uniformly-wound, electrical windings which are wound directly on the glass tube. The float member is conical in shape, and is made of an electrically-conducting material such as aluminium.

In the specification FR—A—865 705, a frusto-conical fluid flow chamber is defined by a non-magnetic tube which has a cylindrical external surface. Two uniformly-wound, multi-layer, concentrated electrical windings are carried on the external surfaces of the fluid flow tube at positions spaced widely apart, and a magnetic float member is slidably carried on and is free to be displaced along an axial rod mounted centrally in the flow chamber. The float member has a rounded nose and a pointed tail, and is displaceable by a fluid flowing in the chamber, against its own weight or a biasing spring.

In the specification FR—A1—2 441 832, various fluid flow measuring devices all have a frusto-conical flow chamber in which a frusto-conical, ferromagnetic float member is arranged for displacement axially of the chamber by a fluid flowing therethrough. In all but one of the devices, a uniformly-wound, multi-layer electrical winding is carried directly on a frusto-conical external surface of the wall of the flow chamber. In the remaining device, two uniformly-wound, multi-layer windings are carried at axially-spaced positions on concentric, cylindrical external surfaces of the flow chamber wall.

In the specification US—A—3 522 731, a spherical float member is arranged for displacement in a tapered fluid flow chamber by a fluid flowing therethrough. At least two uniformly-wound, multi-layer electrical windings are arranged alongside the tube, perpendicular thereto, and on opposite sides thereof.

According to one aspect of the present invention a device for measuring mass flow rate of a fluid comprises: an upright tubular housing having a cylindrical outer periphery and an upwardly diverging tapered frustoconical flow chamber for accommodating a fluid; an inlet fitting at a lower end of said housing for introducing said fluid to said chamber at a lower end thereof; an outlet fitting at an upper end of said housing for discharging fluid from an upper end of said flow chamber whereby said fluid flows through said flow chamber vertically upwardly; an electromagnetically susceptible fluid-responsive solid member disposed movably within said flow chamber and propellable upwardly against gravity by the upwardly flowing fluid to a level substantially linearly dependent on the rate of flow of said fluid through said flow chamber; a multi-turn single-layer electrical coil on said cylindrical periphery of said housing and having an inter-turn pitch progressively decreasing from said lower end of said housing to said upper end thereof; a periodic power supply having a high frequency output connected across said coil; and circuit means responsive to the effective inductance of said coil coupled thereto for indicating the rate of flow of said fluid through said chamber.

A fluid flow meter constructed according to the present invention provides a useful, relatively simple, and economic alternative to the various forms of meter referred in the cited prior art. In particular, a meter according to the present invention has but a single electrical winding; and that winding has but a single layer of turns, and is wound on a plain cylindrical outer surface of the housing in which the fluid flow chamber is formed. Morever, the inter-turn pitch of that winding is progressively varied to provide the desired relationship between the position of the float member and the electrical output of the meter, the number of turns per unit length progressively increasing in the direction of fluid flow.

These features of the present invention as well as advantages thereof will become more readily apparent from the following description of certain preferred embodiments thereof made with reference to the accompanying drawings in which:

Fig. 1 is an elevational front view, diagrammatically illustrating a portion of one fluid flow meter according to the present invention;

Fig. 2 is a circuit diagram illustrating various electrical sensing circuits employed in that fluid flow meter;

Fig. 3 is a circuit diagram illustrating another electrical sensing circuit for use in that fluid flow meter;

Fig. 4 is a graph illustrating a relationship between the inductance (or inductive reactance) of a coil incorporated in that meter and the voltage measured at a portion of the circuit shown in Fig. 2 or 3;

Fig. 5 is a graph illustrating a relationship between the rate of flow of a fluid passing through a flow chamber of the meter of Fig. 1 and the electric current measured at an ammeter shown in Figs. 2 or 3;

Fig. 6 is a perspective view of a fluid flow responsive member constructed in a bullet form, which member may be used in the fluid flow chamber in said flow meter;

Fig. 7 is a circuit diagram of an electrical sensing circuit for use in said flow meter;

Fig. 8 is a circuit diagram of another electrical sensing circuit for use in said flow meter;

Fig. 9 is a perspective view illustrating the fluid responsive member of the invention constructed in the form of a spherical ball.

Referring first to Fig. 1, the flow meter there shown includes a vertically standing tubular housing 1 composed of an electromagnetically non-susceptible material such as glass, ceramic or synthetic resin. Conveniently, the housing 1 is transparent and may be composed of a transparent electrically and magnetically nonconductive material (e.g. glass) and, if not so composed itself to be transparent, may be formed with an elongate window extending longitudinally and fitted with a transparent material to allow viewing. The tubular housing 1 has at its lower end a fluid inlet chamber 2 connected with an inlet pipe 3 and at its upper end a fluid outlet chamber 4 connected with an outlet pipe 5, and defines a tapered or frustoconical fluid flow chamber 6 between the inlet and outlet chambers 2 and 4. The tubular housing 1 is supported rigidly by a support member (not shown) to maintain its vertical standing position. A fluid *F* to be measured is introduced through the inlet pipe 3 into the inlet chamber 2, passes through the flow chamber 6 and is discharged through the outlet chamber 4 into the outlet pipe 5. A needle valve 4A is shown arranged at the upper outlet chamber 4 to regulate flow resistance to the fluid *F*. The inner wall 6*a* of the tubular housing 1 defining the flow chamber 6 is here tapered so as to upwardly diverge in its vertical cross section.

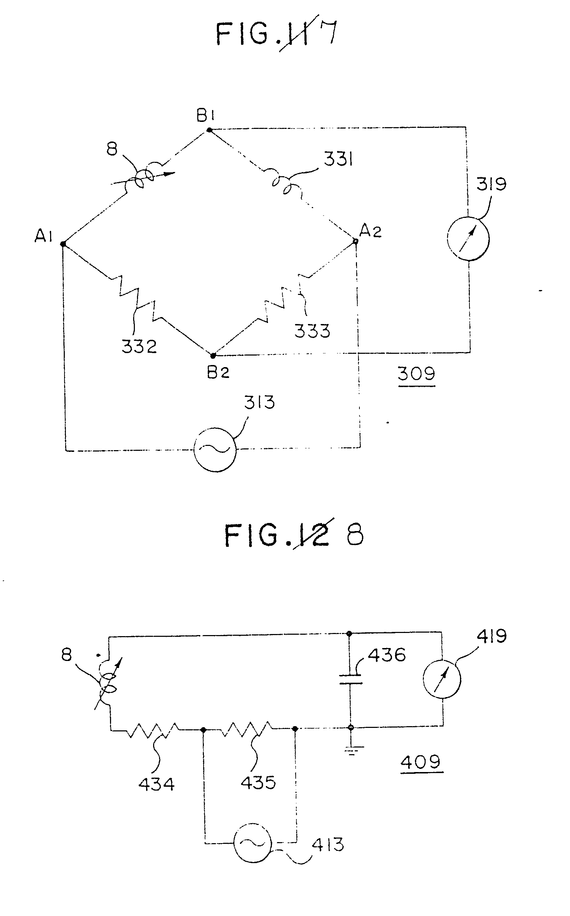

Disposed in the flow chamber 6 is a fluid responsive solid member 7, which may be in the form of a spherical ball as shown and also as illustrated at 70 in an enlarged view in Fig. 9. The fluid responsive member 7 may alternatively be in the form of a bullet as shown at 71 in Fig. 6. The fluid responsive member 7 is constructed so as to have a density greater than the density of the fluid *F* to be measured, so that it gravitates to the bottom of the chamber 6 when there is no flow of

the fluid *F* therein but, with a flow of the fluid *F*, is capable of being propelled by the flowing fluid *F* against gravity and being displaced upwards in an amount proportional, to or, more generally, to a level or height which varies as a function of, the rate of flow of the fluid *F* in the chamber 6.

The fluid responsive member 7 is composed at least in part of an electromagnetically susceptible or inductive material, viz. of a magnetic material such as soft iron or a ferrite, or else of an electrically conductive non-magnetic material, e.g. aluminium. The magnetic material may also be an aluminium-nickel-cobalt alloy, iron-chromium-cobalt alloy, a rare-earth magnetic alloy (e.g. Sm-Co, Pr-Co or Pr-Sm-Co alloy), platinum-cobalt alloy or any other magnetic material or permalloy. The magnetic material may be either such a cast or sintered permanent magnetic material or a material of high permeability such as an iron-silicon-aluminium material or permalloy. The member 7 may be a solid body composed uniformly of such a magnetic or electrically conductive material, or otherwise may contain any other suitable material to adjust its density. Thus, a solid body of magnetic or electrically conductive material may be embedded as a core in a wear-resistant material such as a ceramic, carbon, metal or tetrafluoroethylene, or coated with such a wear-resistant material. The fluid responsive member 7, when constructed in a bullet form 71 as shown in Fig. 6, may advantageously have a base portion 71*a* composed of a nonmagnetic and/or electrically nonconductive material such as a ceramic, carbon, tetrafluoroethylene or a synthetic resin, and a head disk 71*b* composed of a magnetic and/or electrically conductive material. In Fig. 6, a member 71 with a head disk 71*b* magnetized across its thickness is shown.

Further, the tubular housing 1 is shown as having an electrically conductive, single layer winding 8 wound therearound to form a coil extending along the length thereof. The winding 8 has its inter-turn pitch varying progressively along the length of the tubular housing 1, that pitch being progressively reduced upwardly as shown. It is essential that the winding 8 be disposed in an electromagnetically inductive relationship with the fluid responsive solid member 7 in the chamber 6. The winding 8 may also be composed of a semitransparent electrically conductive material so as not to obstruct viewing of the fluid responsive member 7 in the chamber 6 or reading of indicia when provided on the outer or inner wall of the housing 1.

The winding 8 has a pair of terminals 8*a* and 8*b* which connect with an electrical sensing circuit 9 as shown in Fig. 2. The winding 8 is so arranged, when energized by a power supply, as to present an inductive reactance which varies as a function of the level of the fluid responsive member propelled by the flowing fluid *F*, and hence of the rate of flow of the fluid in the flow chamber 6.

Referring now to Fig. 2, there is shown there one embodiment of an electrical sensing circuit 9 which presents an electrical magnitude, e.g. voltage or current, representing the variable value of the inductive reactance of the winding 8. The winding 8 is shown as connectable in one of three alternative reactance circuits 10*a*, 10*b* and 10*c* to a pair of input/output terminals 10*d* and 10*e* of the sensing system 9. The reactance circuit 10*a* is constituted with the winding 8 alone; the reactance circuit 10*b* comprises a parallel resonant circuit constituted with the winding 8 and a capacitor 11 connected in parallel therewith; and the reactance circuit 10*c* comprises a series resonant circuit constituted with the winding 8 and a capacitor connected in series therewith. When the winding 8 is energized by a high-frequency signal applied from an oscillator 13 via an amplifier 14, cables 15 and terminals 10*d* and 10*e*, there develops across the terminals 10*d* and 10*e* an electrical signal which represents the inductive reactance of the winding 8 that varies as a function of the position taken up by the fluid responsive solid member 7. The circuit 10*a* may be selected to provide a voltage signal which represents the voltage across or the current through the winding 8 varying with the inductive reactance thereof. The circuit 10*b* may be used to provide a voltage signal which represents the voltage across or current through the parallel resonant circuit whose resonant frequency varies with the inductive reactance of the winding 8 included therein. The circuit 10*c* may be chosen to provide a voltage signal which represents the voltage across or current through the series resonant circuit whose resonant frequency varies with the inductive reactance of the winding 8 connected therein.

The high-frequency voltage signal of any one of these reactance circuits 10*a*, 10*b* and 10*c*, when in use for operation, is applied to an operational amplifier 16 for signal stabilization and amplification. The amplified high-frequency output signal of the amplifier 16 is applied to an integrating circuit 17 comprising a diode 17*a* and a capacitor 17*b* and is thereby converted to a continuous DC voltage which feeds into a DC amplifier 18. An indicator 19 is connected to the output of the amplifier 18 to indirectly indicate the fluid flow rate in the chamber 6 through a voltage or current signal sensed at the amplifier output or to directly indicate the flow rate converted from the sensed signal, and is shown by an ammeter. An optional output terminal 20 may be provided for applying the latter signal to a fluid flow regulation system or any required control system associated with the fluid flow. A zero—point adjustment for the indicator 19 is made through a reference input 21 to the DC amplifier 18. The cables 15 connecting the reactance circuit 10 disposed in direct proximity to the tubular housing 1 to the sensing circuit 9 are shown as utilizing a coaxial cable.

Example

A cylindrical tubular housing 1 is made of glass and has its outer cylindrical wall of a diameter of 9 mm and, for defining a flow chamber 6, an inner

wall 6*a* tapered to diverge upwardly and having a diameter of 6.5 mm at a lower end portion and a diameter of 7.5 mm at an upper end portion of the housing 1. A copper conductor of a diameter of 0.1 mm is wound with 80 turns around the housing between those end portions which have a distance of 60 mm so as to form a coil 8 having its winding or inter-turn pitch of 2 mm at the lower end portion progressively decreased to 0.3 mm at the upper end portion. A spherical ball composed of a ferrite for high-frequency uses and having a diameter of 6.35 mm is put in the flow chamber 6 to serve as a float or fluid-responsive member 7, and the coil 8 is energized by a high-frequency AC or periodic DC signal of a frequency of 1 MHz. As the fluid to be measured, a nitrogen gas is supplied at a pressure of 0.5 $kg/cm^2$ (i.e. $4.9\times10^4 N/M^2$) and caused to flow through the flow chamber 6 at varying volume rates of flow, propelling the float up to varying heights therein. As the float displaces upwards, the coil 8 has its inductive reactance to the input signal varied proportionally to the amount of displacement, and has an inductance of 8.0 μH when it locates at the lowermost position and 8.3 μH when it locates at the uppermost position.

Fig. 3 shows a modification of the electrical sensing system shown in Fig. 2, and uses the same reference numerals to designate the same components as are used in Fig. 2. In this modification, the series resonant reactance circuit 10*c* shown in Fig. 2 is constituted with the coil 8 wound around the tubular housing 1 and the capacitor 12 in the sensing circuit 9 which is connected thereto via the coaxial cable 15 extending over a distance. In this embodiment, a variable capacitor 22 is connected across the coil 8 for fine adjustment of the resonant frequency of the circuit 10*c*. Here again, the source 13 may provide a high-frequency input signal of a frequency of 1 MHz to the reactance circuit 10*c* including the capacitor 12 which may have a capacitance of 1000 pF.

In the graph of Fig. 4, the terminal voltage *V* of the capacitor 17*b* constituting the integrating circuit 17 in the system of Fig. 3 is plotted along the ordinate and the inductance (or inductive reactance) *L* of the coil 8 is plotted along the abscissa. As the graph shows, a resonant condition is established with the circuit 10*c* when the coil 8 has inductance Lo, providing a maximum voltage Vo. The circuit is adjusted so that the coil 8 has an inductance La, slightly in excess of Lo, when in the absence of fluid flow in the flow chamber 6 the float 7 remains at the lowermost operating position *A* in Fig. 1. The initial inductance La equals to 8.0 μH in Example above. The graph shows that as the float 7 moves from the lowermost position *A* to the uppermost operating position *B*, entailing a change in inductance ΔL from La to Lb, the voltage changes from Va to Vb along the curve C. In the example above, Lb equals to 8.3 μH and ΔL thus equals to 0.3 μH. With this overall change in inductance ΔL, the capacitor 17*b* provided a voltage difference ΔV=Va−Vb, equal to 2.5 volts. The capacitor 17*b* had a capacitance of 3000 pF.

Fig. 5 shows a graph in which the volume flow rate (l/min) of nitrogen gas *F* at a pressure of 0.5 $kg/cm^2$ passing through the flow chamber 6 is plotted along the ordinate and the reading of the ammeter 19 (μA) is plotted along the abscissa. It is seen that the ammeter reading changes linearly with the flow rate.

When using the flowmeter of the invention, with a fluid *F* continuously passing through the flow chamber 6, the input signal may be applied continuously from the signal source 13 to provide continuous monitoring of the flow rate. It is also possible to periodically connect the signal source 13 to the sensing circuit 9 to enable monitoring at predetermined time intervals. The source 13 may also be connected to the sensing circuit 9 temporarily to execute monitoring selectively when a requirement arises.

In the circuits 309 and 409 of Figs. 7 and 8, the variable reactance winding 8 refers to the one shown in Fig. 1.

In the circuit 309 of Fig. 7, the winding 8 is connected with an inductor 331 and resistors 332 and 333 to form a Maxwell bridge energized by the output of an AC source or oscillator 313 which is applied across the junction A1 between the reactance winding 8 and the resistor 332 and the junction A2 between the inductor 331 and the resistor 333. An ammeter 319 is connected across the junction B1 between the reactance winding 8 and the inductor 331 and the junction B2 between the resistors 332 and 333. When the reactance of the winding 8 changes by δL, there flows between the junctions B1 and B2 an electric current proportional to δL which is read by the ammeter 319 in terms of the electric current itself or the rate of flow of the fluid in the flow chamber causing the change δL as already described.

In the circuit 409 of Fig. 8, a serial circuit of the reactance winding 8, a resistor 434 and a resistor 435 is connected in series with a capacitor 436 and with a voltmeter 419 connected in parallel with the latter. The resistor 434 represents a resistance component R of the winding 8 and the resistor 435 makes use of a non-inductive resistance Ro which is much less than R. A high-frequency oscillator or AC source 413 is connected across the resistor 435 to develop a high-frequency voltage of small magnitude thereacross which is supplied to the LC tuning circuit constituted by the reactance 8 and the capacitor 436. The capacitiance *C* of the capacitor 436 is adjusted so that the LC circuit resonates when the float or fluid responsive member is located at an uppermost position in the flow chamber. The capacitor 436 has thus its terminal voltage *E* in the resonance state:

$$E=\frac{Io}{\omega_C}=\frac{Ro}{\omega_{CR}}$$

where Io is resonant current and ω is resonant

frequency. As the reactance of the coil 8 is reduced, the current I passing through the LC circuit decreases and the capacitor terminal voltage *E* diminishes. The voltmeter 419 is used to measure the voltage *E* and hence the flow rate.

**Claims**

1. A device for measuring mass flow rate of a fluid, comprising:

un upright tubular housing (1) having a cylindrical outer periphery and an upwardly diverging frustoconical flow chamber (6) for accommodating a fluid;

an inlet fitting (2) at a lower end of said housing (1) for introducing said fluid to said chamber (6) at a lower end thereof;

an outlet fitting (4) at an upper end of said housing (1) for discharging fluid from an upper end of said flow chamber (6) whereby said fluid flows through said flow chamber (6) vertically upwardly;

an electromagnetically susceptible fluid-responsive solid member (7) disposed movably within said flow chamber (6) and propellable upwardly against gravity by the upwardly flowing fluid to a level substantially linearly dependent on the rate of flow of said fluid through said flow chamber (6);

a multi-turn, single-layer electrical coil (8) on said cylindrical periphery of said housing (1) and having an inter-turn pitch progressively decreasing from said lower end of said housing (1) to said upper end thereof;

a periodic power supply (13) having a high frequency output connected across said coil (8); and

circuit means (9) responsive to the effective inductance of said coil (8) coupled thereto for indicating the rate of flow of said fluid through said chamber.

2. The device defined in Claim 1 wherein said fluid-responsive solid member (7) is magnetically permeable but substantially electrically nonconductive.

3. The device defined in Claim 2 wherein said member (7) is at least in part composed of a ferrite.

4. The device defined in Claim 3 wherein said ferrite forms a core embedded in a nonmagnetic and electrically nonconductive substance.

5. The device defined in Claim 1 wherein said member (7) comprises a ferrite and at least one substance selected from the group which consists of synthetic resin, ceramic and carbon.

6. The device defined in Claim 5 wherein said member (7) is in the form of a spherical ball (Fig. 16, 70).

7. The device defined in Claim 5 wherein said member (7) is generally in the form of a bullet (Fig. 8, 71).

8. The device defined in Claim 5 wherein said member (7) comprises an upper portion (71*b*) substantially constituted by a circular disk and a lower portion (71*a*) constituted at its upper part by a cylinder and at its lower part by a substantially downwardly pointed cone contiguous to said cylinder.

9. The device defined in Claim 8 wherein said member (7) further comprises an intermediate portion lying between said upper and lower portions and in the form of a generally downwardly convergent truncated cone.

**Patentansprüche**

1. Vorrichtung zur Messung der Durchflußgeschwindigkeit eines Fluids, die folgende Merkmale aufweist:

Ein aufrecht stehendes tubusförmiges, äußerlich zylindrisches Gehäuse (1) mit einer sich nach oben konisch erweiternden Druchflußkammer (6) für das Fluid;

ein Einlaufstutzen (2) am unteren Ende des Gehäuses (1) als Fluideinlaß in die Kammer (6);

ein Auslaufstutzen (4) am oberen Ende des Gehäuses (1) als Fluidauslaß aus der Kammer (6), so daß das Fluid in der Kammer (6) vertikal aufwärts strömt;

ein in der Druchflußkammer (6) beweglich angeordnetes auf das Fluid ansprechendes Bauteil (7) aus einem elektronisch beeinflußbaren Material, das von dem aufwärts strömenden Fluid entgegen der Schwekraft nach oben gefördert wird auf eine Höhe, die im wesentlichen linear von der Durchflußgeschwindigkeit des Fluids durch die Kammer (6) abhängt;

eine einlagige elektrische Spule (8) auf der zylindrischen Gehäusewandung mit mehreren Windungen, deren Steigung vom unteren zum oberen Gehäuseende progressiv abnimmt;

eine Wechselstrômquelle (13), deren Hochfrequenzausgang mit der Spule (8) verbunden ist; und

Schaltungsmittel (9), die in Abhängigkeit von der effektiven Induktanz der mit ihnen gekoppelten Spule (8) die Durchflußmenge des Fluids durch die Kammer (6) anzeigen.

2. Vorrichtung nach Anspruch 1, bei der das auf das Fluid ansprechende Bauteil (7) magnetisch, aber im wesentlichen elektrisch nichtleitend ist.

3. Vorrichtung nach Anspruch 2, bei der das Bauteil (7) wenigstens zum Teil aus einem Ferrit besteht.

4. Vorrichtung nach Anspruch 3, bei der ein Ferritkern in eine unmagnetische und elektrisch nichtleitende Substanz eingebettet ist.

5. Vorrichtung nach Anspruch 1, bei der das Beauteil (7) aus Ferrit und aus mindestens einer Substanz besteht, die aus einer Stoffgruppe ausgewählt ist, zu der Kunstharz, Keramik und Kohlenstoff gehören.

6. Vorrichtung nach Anspruch 5, bei der das Bauteil (7) die Form einer Kugel hat (Fig. 9, 70).

7. Vorrichtung nach Anspruch 5, bei der das Bauteil (7) in etwa geschoßförmig ist (Fig. 6, 71).

8. Vorrichtung nach Anspruch 5, bei der das Bauteil (7) im oberen Teil im wesentlichen aus

einer runden Scheibe (71b) und im unteren Teil aus einem Zylinder (71a) mit daran anschließender abwärts gerichteter konischer Spitze besteht.

9. Vorrichtung nach Anspruch 8, bei der das Bauteil (7) ferner ein Zwischenteil zwischen dem oberen und dem unteren Teil aufweist, das die Form eines abwärts gerichteten Kegelstumpfes hat.

**Revendications**

1. Dispositif pour mesure un débit massique d'un fluide comprenant une enveloppe tubulaire verticale (1) ayant une périphérie externe cylindrique et une chambre d'écoulement tronconique (6), divergeant vers le haut, pour recevoir un fluide, une chambre d'entrée (2) à une extrémité inférieure de l'enveloppe (1) pour introduire le fluide dans la chambre d'écoulement (6), à une extrémité inférieure de celle-ci, une chambre de sortie (4) à une extrémité supérieure de l'enveloppe (1) pour évacuer le fluide à partir d'une extrémité supérieure de la chambre d'écoulement (6), de telle façon que le fluide s'écoule verticalement vers le haut à travers la chambre d'écoulement (6), un organe solide (7), répondant au fluide et présentant une susceptibilité électromagnétique, lequel est logé d'une manière mobile dans la chambre d'écoulement (6) et peut être propulsé vers le haut, à l'encontre de la gravité, par le fluide s'écoulant vers la haut, jusqu'à un niveau dépendant sensiblement d'une manière linéaire de la vitesse de l'écoulement du fluide à travers la chambre d'écoulement (6), et une bobine électrique (8) à une seule couche et à plusieurs spires sur la périphérie cylindrique de l'enveloppe (1), cette bobine ayant un pas entre spires diminuant progressivement à partir de l'extrémité inférieure de l'enveloppe (1) et en direction de l'extrémité supérieure de celle-ci, une source d'alimentation électrique périodique (13) ayant une sortie à haute fréquence connectée aux bornes de la bobine, et un circuit (9) répondant à l'inductance effective de la bobine (8) qui lui est couplée, afin d'indiquer le débit du fluide à travers la chambre.

2. Dispositif suivant la revendication 1 caractérisé en ce que l'organe solide (7) répondant au fluide est perméable magnétiquement mais pratiquement non conducteur de l'électricité.

3. Dispositif suivant la revendication 2 caractérisé en ce que l'organe (7) est composé au moins en partie d'un ferrite.

4. Dispositif suivant la revendication 3 caractérisé en ce que le ferrite forme un noyau enrobé dans une substance non magnétique et non conductrice de l'électricité.

5. Dispositif suivant la revendication 1 caractérisé en ce que l'organe (7) est constitué par un ferrite et au moins une substance choisie dans le groupe comprenant les résines synthétiques, les céramiques et le carbone.

6. Dispositif suivant la revendication 5 caractérisé en ce que l'organe (7) est réalisé sous la forme d'une bille sphérique (figure 9, 70).

7. Dispositif suivant la revendication 5, caractérisé en ce que l'organe (7) est réalisé d'une manière générale sous la forme d'une balle (figures 8, 71).

8. Dispositif suivant la revendication 5 caractérisé en ce que l'organe (7) comprend une portion supérieure (71b) constituée sensiblement par un disque circulaire et une portion inférieure (71a) constituée, à sa partie supérieure, par un cylindre et, à sa partie inférieure, par un cône dont la pointe est dirigée vers le bas et qui est contigu au cylindre.

9. Dispositif suivant la revendication 8 caractérisé en ce que l'organe (7) comporte en outre une portion intermédiaire se trouvant entre les portions supérieure et inférieure et réalisées sous la forme d'un tronc de cône convergeant d'une manière générale vers le bas.

FIG.1

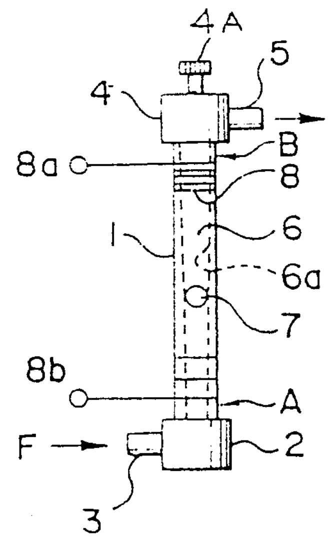


FIG.4

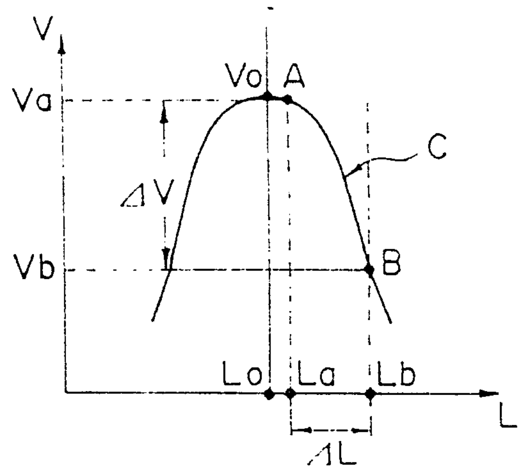


FIG.2

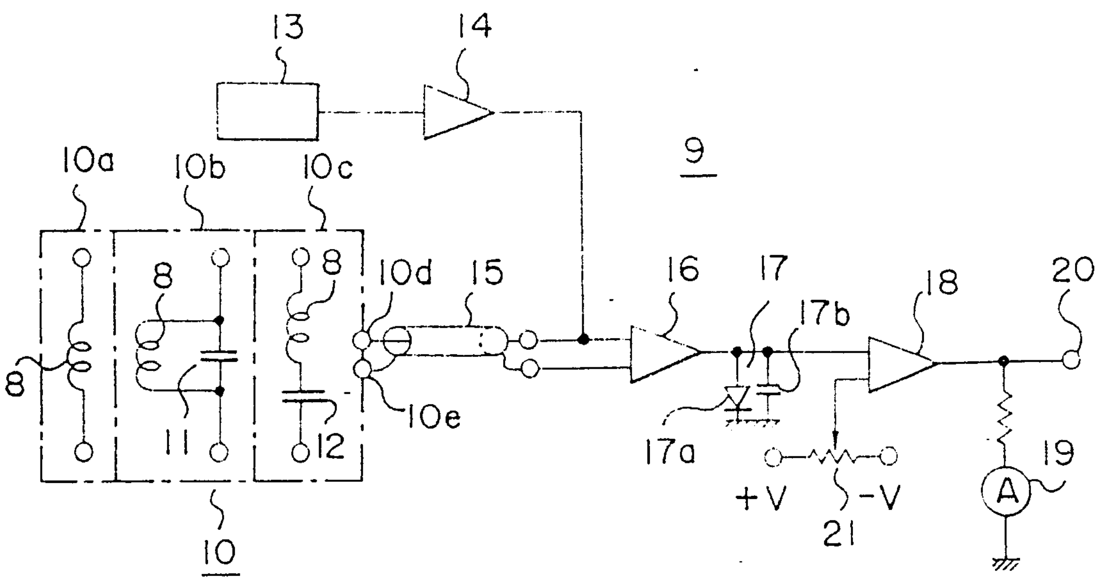

FIG.3

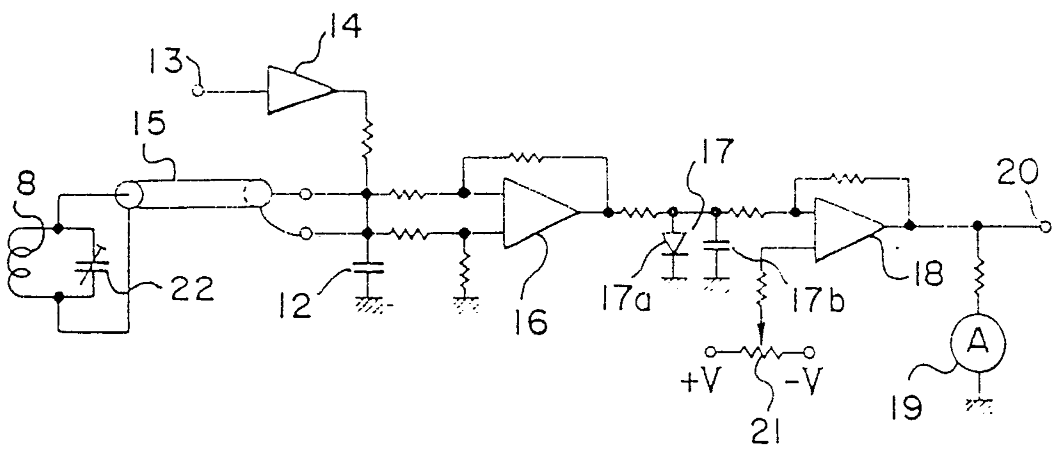


FIG.~~8~~6

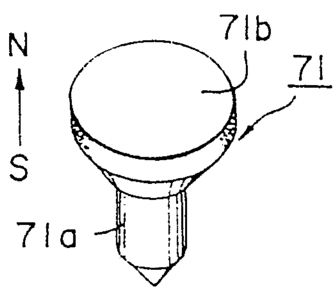


FIG.9

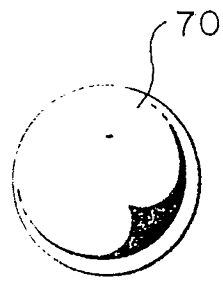

FIG.5

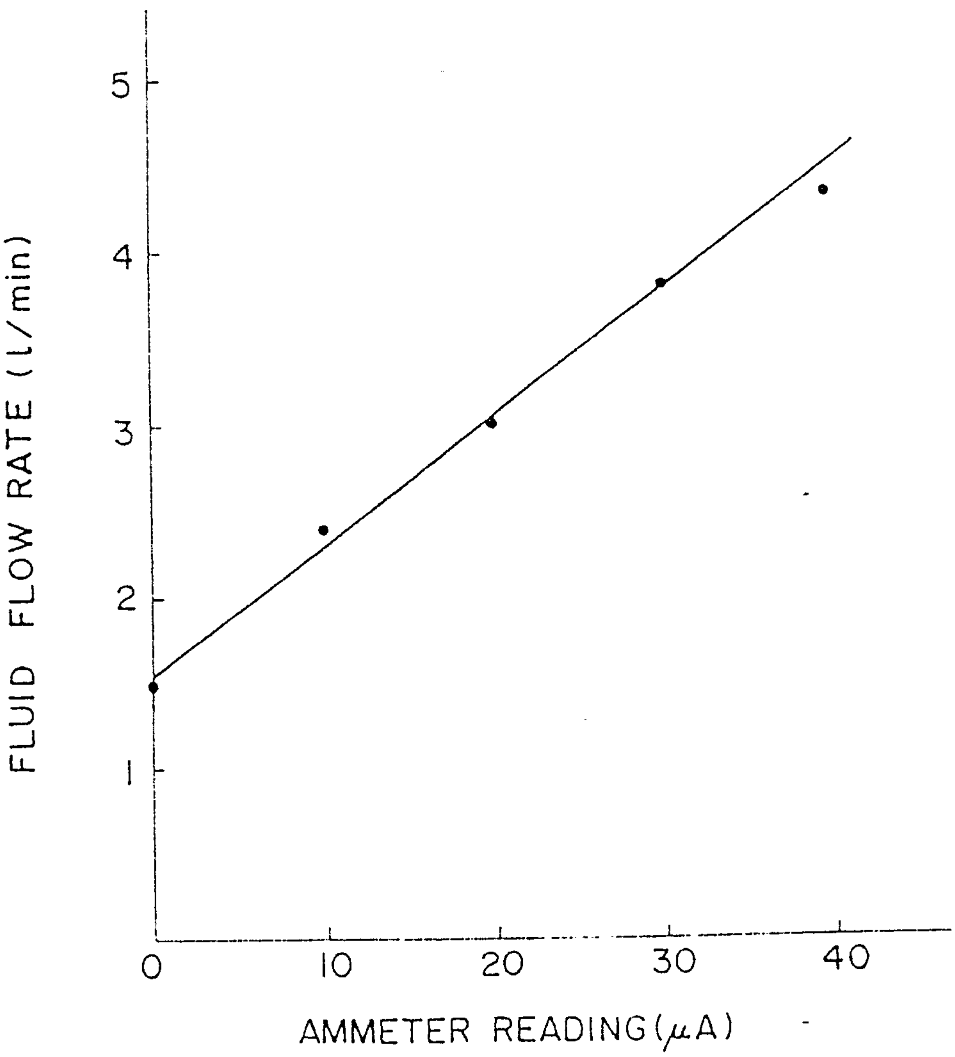

FIG. ~~11~~ 7

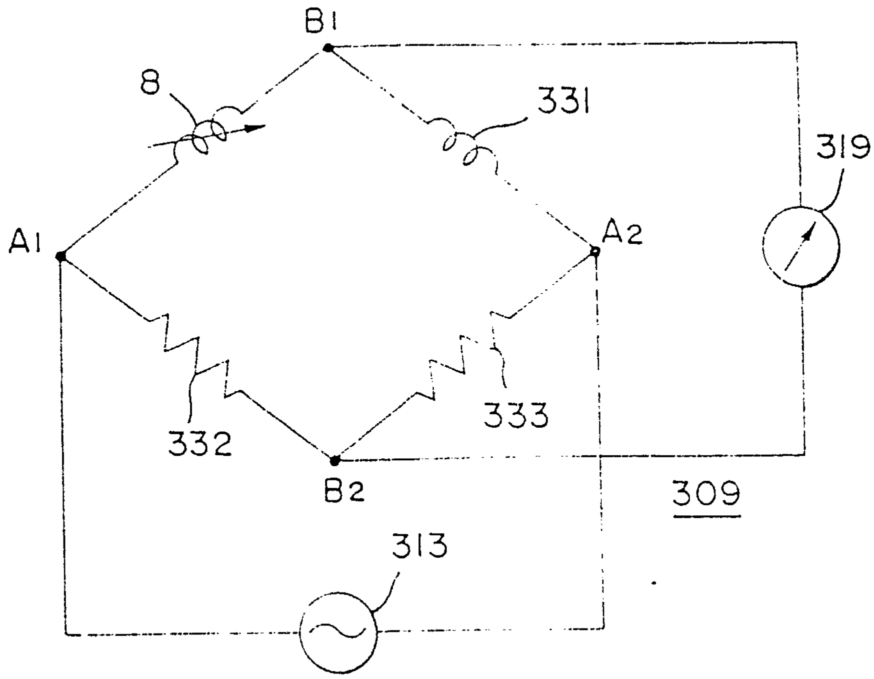


FIG. ~~12~~ 8